# EUROPEAN PATENT SPECIFICATION

(11) **EP 4 480 313 B1**
(45) Date of publication and mention of the grant of the patent: **12.08.2026**
(21) Application number: 23208834.4
(22) Date of filing: 09.11.2023
(51) Int. Cl.: A01N 25/34, A01N 53/00, A01P 17/00, A01M 1/20, A01N 25/10, A01N 25/18, A01N 25/08, A01M 29/12

(54) **MULTI-TEMPERATURE ZONE MOSQUITO PREVENTION AND CONTROL TABLET**
TABLETTE ZUR MÜCKENVERMEIDUNG UND KONTROLLE IN MEHREREN TEMPERATURZONEN
COMPRIMÉ ANTI-MOUSTIQUES À ZONES À TEMPÉRATURES MULTIPLES ET DE LUTTE CONTRE LES MOUSTIQUES

(30) Priority: 20.06.2023 CN 202310740737
(43) Date of publication of application: 25.12.2024
(73) Proprietor: Li, Wenjie, Guangzhou Guangdong (CN)
(72) Inventor: LI, Wenjie, Guangzhou (CN)
(74) Representative: Metida

(56) References cited:
- EP-B1- 1 313 516
- CN-A- 114 403 142
- CN-A- 114 631 524
- CN-B- 109 511 656
- TW-A- 201 742 856
- US-A1- 2013 251 773

## Description

### CROSS-REFERENCE TO RELATED APPLICATIONS

This application claims priority to Chinese Patent Application No. 202310740737.6, filed on June 20th, 2023.

### TECHNICAL FIELD

The present application relates to the technical field of mosquito prevention and control, in particular to a multi-temperature zone mosquito prevention and control tablet.

### BACKGROUND

A mosquito prevention and control problem is one of the problems that may not be ignored in people's daily life, and an electric mosquito killer using tablets becomes a commonly used mosquito repellent device due to the lack of open flame, easy portability and other reasons. Usually the working temperature and deviation of the electric heater are (165±8)°C, and (pyrethroid) pyrethrin needs to be electric-heated to combustion-heated to "165±8°C" so as to achieve the best mosquito killing effect. Therefore, mosquito killing apparatuses mainly composed of the (pyrethroid) pyrethrin are difficult to achieve lightweight. However, heated mosquito killing apparatuses powered by combustible gases have many limitations in travel and transportation processes. In addition, due to the different optimal working temperatures of various mosquito repellent drugs, the tablet used for the electric mosquito killer in existing technologies usually only includes one effective component, it needs to be placed in a heating zone of the electric mosquito killer, and uniformly heated throughout the entire zone to diffuse the drugs in the tablet. In other words, the tablet used in combination with the electric mosquito killer in the existing technologies may only diffuse a single effective drug and may not simultaneously diffuse a plurality of the drugs to achieve the combined effect of mosquito repelling and mosquito killing.

It is known this Prior Art document US2013/251773A1 published on September 26, 2013, which describes controlled release insect repellent materials. Unlike proposed invention, it lacks a tablet substrate with thermal conductivity, and by controlling the heating temperature of the first drug zone by an external heat source, the temperature of the second drug zone may be indirectly controlled by controlling a distance between the second drug zone and a centerline of the tablet substrate, namely the distance between the second drug zone and the first drug zone. At the same time, the second drug zone is located on both sides of the tablet substrate, directly in contact with the air, which may transfer the heat to the air, so that a larger temperature difference between the first drug zone and the second drug zone may be further produced, and the second drug zone has the better volatilization effect.

Also it is known this Prior Art document CN114631524A published on June 17, 2022, which describes an insect repellent device. Unlike proposed invention, it lacks a tablet substrate with thermal conductivity, and by controlling the heating temperature of the first drug zone by an external heat source, the temperature of the second drug zone may be indirectly controlled by controlling a distance between the second drug zone and a centerline of the tablet substrate, namely the distance between the second drug zone and the first drug zone. At the same time, the second drug zone is located on both sides of the tablet substrate, directly in contact with the air, which may transfer the heat to the air, so that a larger temperature difference between the first drug zone and the second drug zone may be further produced, and the second drug zone has the better volatilization effect.

Also it is known this Prior Art document CN109511656B published on March 26, 2019, which describes a Miniature electric heating mosquito incense piece. Unlike proposed invention, it lacks a tablet substrate with thermal conductivity, and by controlling the heating temperature of the first drug zone by an external heat source, the temperature of the second drug zone may be indirectly controlled by controlling a distance between the second drug zone and a centerline of the tablet substrate, namely the distance between the second drug zone and the first drug zone. At the same time, the second drug zone is located on both sides of the tablet substrate, directly in contact with the air, which may transfer the heat to the air, so that a larger temperature difference between the first drug zone and the second drug zone may be further produced, and the second drug zone has the better volatilization effect.

Also it is known this Prior Art document TW201742856A published on December 16, 2017, which describes an ester compounds and use thereof. Unlike proposed invention, it lacks a tablet substrate with thermal conductivity, and by controlling the heating temperature of the first drug zone by an external heat source, the temperature of the second drug zone may be indirectly controlled by controlling a distance between the second drug zone and a centerline of the tablet substrate, namely the distance between the second drug zone and the first drug zone. At the same time, the second drug zone is located on both sides of the tablet substrate, directly in contact with the air, which may transfer the heat to the air, so that a larger temperature difference between the first drug zone and the second drug zone may be further produced, and the second drug zone has the better volatilization effect.

Also it is known this Prior Art document CN114403142A published on April 29, 2019, which describes a strong-effect odorless permethrin electric heating mosquito-repellent incense tablet and a preparation method of the strong-effect odorless permethrin electric heating mosquito-repellent incense tablet. Unlike proposed invention, it lacks a tablet substrate with thermal conductivity, and by controlling the heating temperature of the first drug zone by an external heat source, the temperature of the second drug zone may be indirectly controlled by controlling a distance between the second drug zone and a centerline of the tablet substrate, namely the distance between the second drug zone and the first drug zone. At the same time, the second drug zone is located on both sides of the tablet substrate, directly in contact with the air, which may transfer the heat to the air, so that a larger temperature difference between the first drug zone and the second drug zone may be further produced, and the second drug zone has the better volatilization effect.

Also it is known this Prior Art document EP1313516B1 published on May 06, 2024, which describes two-stage dispensing mat. Unlike proposed invention, it lacks a tablet substrate with thermal conductivity, and by controlling the heating temperature of the first drug zone by an external heat source, the temperature of the second drug zone may be indirectly controlled by controlling a distance between the second drug zone and a centerline of the tablet substrate, namely the distance between the second drug zone and the first drug zone. At the same time, the second drug zone is located on both sides of the tablet substrate, directly in contact with the air, which may transfer the heat to the air, so that a larger temperature difference between the first drug zone and the second drug zone may be further produced, and the second drug zone has the better volatilization effect.

### SUMMARY

The present application provides a multi-temperature zone mosquito prevention and control tablet, as to solve the problem that the tablet used in combination with the electric mosquito killer in the existing technologies may only diffuse a single effective drug and may not simultaneously diffuse a plurality of the drugs to achieve the combined effect of mosquito repelling and mosquito killing. The invention is defined by the subject-matter of independent claim 1.

In order to achieve the above purpose, the present application adopts the following technical schemes.

A multi-temperature zone mosquito prevention and control tablet, including a tablet substrate.

A middle portion of the tablet substrate is provided with a first drug zone, and two sides of the tablet substrate are provided with a second drug zone.

The first drug zone is filled with pyrethroid, and the second drug zone is filled with a repellent drug.

The repellent drug includes picaridin, dimethyl phthalate, methyl nonyl ketone, and diethylmethylbenzamide.

Further, the tablet substrate is made of a hydrophilic material.

Further, two second drug zones are symmetrically arranged on both sides of the tablet substrate.

Further, the repellent drug in the second drug zone is the picaridin.

An electric mosquito killer, used to heat the above multi-temperature zone mosquito prevention and control tablet, herein the electric mosquito killer is provided with a heating unit, and the heating unit is used to heat the first drug zone of the tablet substrate.

Further, the electric mosquito killer is provided with a slot matched with the tablet substrate.

The beneficial effects of the present application are as follows.
1. The different repellent drugs may be diffused in combination, to achieve the composite mosquito prevention and control effects.
2. The working temperature of the drug in the first drug zone is higher than the working temperature of the drug in the second drug zone. Only the first drug zone is heated, and then the temperature is diffused by the tablet substrate, thereby the drug in the second drug zone is heated without increasing the energy consumption of the electric mosquito killer used in combination.

### BRIEF DESCRIPTION OF THE DRAWINGS

Fig. 1 is an overall schematic diagram of a multi-temperature zone mosquito prevention and control tablet;
Fig. 2 is a front-view diagram of the multi-temperature zone mosquito prevention and control tablet mounted on an electric mosquito killer; and
Fig. 3 is a left-view diagram of the multi-temperature zone mosquito prevention and control tablet mounted on the electric mosquito killer by a slot.

### DETAILED DESCRIPTION OF THE EMBODIMENTS

In order to make purposes, technical schemes, and advantages of the present application clearer, the technical schemes of the present application are further clearly and completely described below in combination with embodiments of the present application. It should be noted that the embodiments described are only a part of the embodiments of the present application, not all of the embodiments.

It should be noted that if a directional indication (such as up, down, left, right, front, back, top, bottom, inside, outside, vertical, horizontal, longitudinal, counterclockwise, clockwise, circumferential, radial, and axial) is involved in the embodiments of the present application, the directional indication is only used to explain a relative position relationship, a motion situation and the like between various components in a specific posture (as shown in the drawings). If the specific posture is changed, the directional indication is also changed accordingly with it.

The term "and/or" in the embodiments of the present application is only a description of an association relationship of associated objects, it is indicated that there may be three types of relationships, for example, A and/or B, it may indicate: the existence of A alone, the existence of A and B simultaneously, and the existence of B alone.

The terms "first" and "second" in the embodiments of the present application are only used for descriptive purposes and may not be understood as indicating or implying the relative importance or implying the quantity of technical features indicated. Therefore, features limited to "first" and "second" may explicitly or implicitly include at least one of these features. In the description of the present application, the terms "including" and "having" and any variations thereof are intended to cover non-exclusive inclusion. For example, a system, a product, or a device that contains a series of components or units is not limited to the listed components or units, but optionally includes unlisted components or units, or optionally includes other components or units inherent to these products or devices. In the description of the present application, "plurality" means at least two, for example two and three, unless otherwise specified.

The reference to "embodiments" in this article means that specific features, structures, or characteristics described in combination with the embodiments may be contained in at least one embodiment of the present application. The phrase appearing in various positions in the description does not necessarily refer to the same embodiment, nor is it an independent or alternative embodiment that is mutually exclusive with other embodiments. Those skilled in the art explicitly and implicitly understand that the embodiments described in this article may be combined with other embodiments.

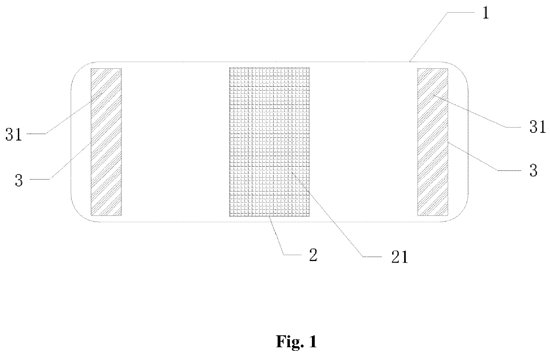

As shown in Fig. 1, the present application provides a multi-temperature zone mosquito prevention and control tablet, it is mainly composed of a tablet substrate 1 filled with a drug for mosquito repelling and mosquito killing, and the tablet substrate 1 is made of a hydrophilic material (such as a plant fiber material and a porous foam material), and is in the shape of tablets (tablet-like).

A middle portion of the tablet substrate 1 is provided with a first drug zone 2, and two sides of the tablet substrate 1 are symmetrically provided with a second drug zone 3. When the tablet of the present application is used, only the first drug zone 2 needs to be heated, the heating temperature of the first drug zone 2 is controlled, and the tablet substrate 1 itself has the thermal conductivity and may transfer heat to the second drug zone 3 on both sides. The tablet substrate 1 has the thermal resistance, and there is a certain loss when the heat is transferred to the second drug zone 3, so that the heating temperature of the second reagent zone 3 may be lower than that of the first drug zone 2; and on the basis of controlling the heating temperature of the first drug zone 2 by an external heat source, the temperature of the second drug zone 3 may be indirectly controlled by controlling a distance between the second drug zone 3 and a centerline of the tablet substrate 1, namely the distance between the second drug zone 3 and the first drug zone 2. At the same time, the second drug zone 3 is located on both sides of the tablet substrate 1, directly in contact with the air, which may transfer the heat to the air, so that a larger temperature difference between the first drug zone 2 and the second drug zone 3 may be further produced, and the second drug zone 3 has the better volatilization effect.

In existing technologies, drugs commonly used for mosquito prevention and control include pyrethroid (such as prallethrin, meperfluthrin, dimefluthrin, and permethrin), picaridin, dimethyl phthalate, methyl nonyl ketone, diethylmethylbenzamide and the like, herein the pyrethroid has a relatively high melting point and require a relatively high working temperature, and belongs to mosquito killing drugs, while the picaridin, dimethyl phthalate, methyl nonyl ketone, and diethylmethylbenzamide have a relatively low working temperature at the room temperature (25°C), and all of which belong to mosquito repelling drugs with relatively low toxicity. Moreover, the optimal diffusion temperature ranges of the above mosquito repelling drugs are close.

In conclusion, the first drug zone 2 is filled with the pyrethroid 21, the second drug zone 3 is loaded with a repellent drug 31, and the repellent drug 31 is one of the picaridin, dimethyl phthalate, methyl nonyl ketone, and diethylmethylbenzamide.

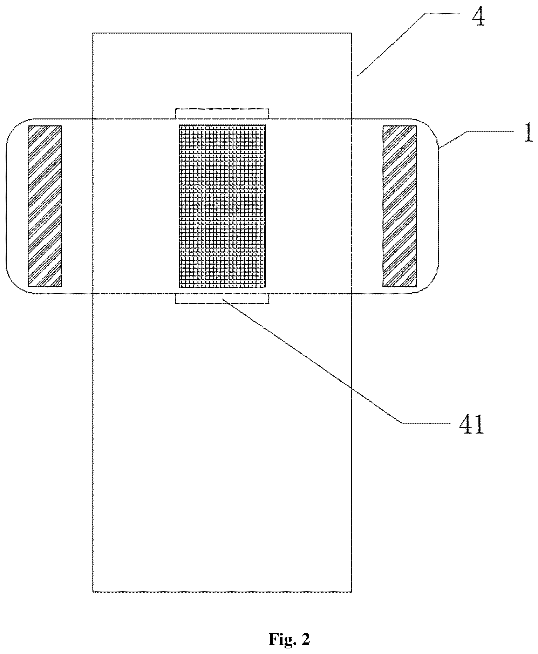

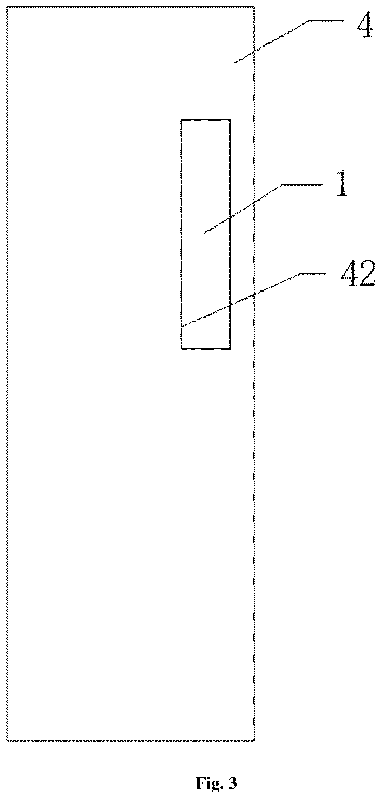

As shown in Fig. 2, a state of the multi-temperature zone mosquito prevention and control tablet of the present application mounted on an electric mosquito killer is shown. The electric mosquito killer 4 is provided with a heating unit 41, and the heating unit 41 is used to heat the first drug zone 2 of the drug substrate 1. As shown in Fig. 3, the electric mosquito killer fixes the drug substrate 1 by arranging a slot 42, the drug substrate 1 may be inserted into the slot 42 from a side surface of the electric mosquito killer 4, the heating unit 41 only heats the first drug zone 2, and the second drug zone 3 at both ends is heated by using the diffused temperature. A plurality of drugs is diffused simultaneously, and at the same time, because only the first drug zone 2 needs to be heated, the energy consumption is also saved actually.

In a preferred embodiment of the present application, the repellent drug 31 filled in the second drug zone 3 is the picaridin.

The above embodiments only express implementation modes of the present application, and its descriptions are more specific and detailed. It should be pointed out that for those of ordinary skill in the art, a plurality of deformations and improvements may also be made without departing from the concept of the present application, all of which shall fall within the scope of protection of the present application. Therefore, the scope of protection of the present application should be based on the appended claims.

## Claims

1. A multi-temperature zone mosquito prevention and control tablet, comprising a tablet substrate (1) with thermal conductivity;
a middle portion of the tablet substrate (1) is provided with a first drug zone (2), and two sides of the tablet substrate (1) are provided with a second drug zone (3); there is a distance between the second drug zone (3) and a centerline of the tablet substrate (1);
the first drug zone (2) is filled with pyrethroid, and the second drug zone (3) is filled with a repellent drug;
**characterized in that** the repellent drug comprises picaridin, dimethyl phthalate, methyl nonyl ketone, and diethylmethylbenzamide; and
the tablet substrate (1) has thermal resistance;
wherein a heating temperature of the first drug zone (2) is controlled, and the tablet substrate (1) has a thermal conductivity and transfer heat to the second drug zone (3) on both sides;
wherein a temperature of the second drug zone (3) is indirectly controlled by controlling a distance between the second drug zone (3) and a centerline of the tablet substrate (1), namely a distance between the second drug zone (3) and the first drug zone (2).

2. The multi-temperature zone mosquito prevention and control tablet according to claim 1, wherein the tablet substrate (1) is made of a hydrophilic material.

3. The multi-temperature zone mosquito prevention and control tablet according to claim 1, wherein two second drug zones (3) are symmetrically arranged on both sides of the tablet substrate (1).

4. The multi-temperature zone mosquito prevention and control tablet according to claim 1, wherein the repellent drug in the second drug zone (3) is the picaridin.

5. An electric mosquito killer (4), configured to heat the multi-temperature zone mosquito prevention and control tablet according to any one of claims 1-4, **characterized in that** the electric mosquito killer (4) is provided with a heating unit (41), and the heating unit (41) is configured to heat the first drug zone (2) of the tablet substrate (1).

6. The electric mosquito killer (4) according to claim 5, wherein the electric mosquito killer (4) is provided with a slot (42) matched with the tablet substrate (1).

## Patentansprüche

1. Mehrtemperaturzonen-Mückenabwehrtablette, umfassend ein Tablettensubstrat (1) mit Wärmeleitfähigkeit, wobei ein mittlerer Abschnitt des Tablettensubstrats (1) mit einer ersten Wirkstoffzone (2) versehen ist und beide Seiten des Tablettensubstrats (1) jeweils mit einer zweiten Wirkstoffzone (3) versehen sind; wobei zwischen der zweiten Wirkstoffzone (3) und einer Mittellinie des Tablettensubstrats (1) ein Abstand vorgesehen ist; wobei die erste Wirkstoffzone (2) mit einem Pyrethroid gefüllt ist und die zweite Wirkstoffzone (3) mit einem Repellent gefüllt ist; **dadurch gekennzeichnet, dass** das Repellent Picaridin, Dimethylphthalat, Methylnonylketon und Diethylmethylbenzamid umfasst; und wobei das Tablettensubstrat (1) Wärmebeständigkeit aufweist; wobei eine Heiztemperatur der ersten Wirkstoffzone (2) gesteuert wird und das Tablettensubstrat (1) eine Wärmeleitfähigkeit aufweist und Wärme an die zweite Wirkstoffzone (3) auf beiden Seiten überträgt; wobei eine Temperatur der zweiten Wirkstoffzone (3) indirekt gesteuert wird, indem ein Abstand zwischen der zweiten Wirkstoffzone (3) und einer Mittellinie des Tablettensubstrats (1) eingestellt wird, nämlich ein Abstand zwischen der zweiten Wirkstoffzone (3) und der ersten Wirkstoffzone (2).

2. Mehrtemperaturzonen-Mückenabwehrtablette nach Anspruch 1, wobei das Tablettensubstrat (1) aus einem hydrophilen Material hergestellt ist.

3. Mehrtemperaturzonen-Mückenabwehrtablette nach Anspruch 1, wobei zwei zweite Wirkstoffzonen (3) symmetrisch an beiden Seiten des Tablettensubstrats (1) angeordnet sind.

4. Mehrtemperaturzonen-Mückenabwehrtablette nach Anspruch 1, wobei das Repellent in der zweiten Wirkstoffzone (3) Picaridin ist.

5. Elektrischer Mückenvernichter (4), der dazu konfiguriert ist, die Mehrtemperaturzonen-Mückenabwehrtablette nach einem der Ansprüche 1-4 zu erhitzen, **dadurch gekennzeichnet, dass** der elektrische Mückenvernichter (4) mit einer Heizeinheit (41) versehen ist und die Heizeinheit (41) dazu konfiguriert ist, die erste Wirkstoffzone (2) des Tablettensubstrats (1) zu erhitzen.

6. Elektrischer Mückenvernichter (4) nach Anspruch 5, wobei der Elektrische Mückenvernichter (4) mit einem Aufnahmeschlitz (42) versehen ist, der an das Tablettensubstrat (1) angepasst.

## Revendications

1. Comprimé de prévention et de contrôle de moustiques en zones à multi-température, comprenant un substrat de comprimé (1) avec conductivité thermique ;
une partie intermédiaire du substrat de comprimé (1) est pourvue d'une première zone de médicament (2), et deux côtés du substrat de comprimé (1) sont pourvus d'une seconde zone de médicament (3) ; une distance existe entre la seconde zone de médicament (3) et une ligne centrale du substrat de comprimé (1) ;
la première zone de médicament (2) est remplie du pyréthroïde ; et la seconde zone de médicament (3) est remplie d'un médicament répulsif ;
**caractérisé en ce que** le médicament répulsif comprend de la picaridine, du phtalate de diméthyle, du méthyl nonyle cétone et du diéthylméthylbenzamide ; et
le substrat de comprimé (1) présente une résistance thermique ;
dans lequel une température de chauffage de la première zone de médicament (2) est sous contrôle, et le substrat de comprimé (1) présente une conductivité thermique et transfert de la chaleur vers la seconde zone de médicament (3) sur deux côtés ;
dans lequel une température de la seconde zone de médicament (3) est sous contrôle indirecte en contrôlant une distance entre la seconde zone de médicament (3) et une ligne centrale du substrat de comprimé (1), soit une distance entre la seconde zone de médicament (3) et la première zone de médicament (2).

2. Comprimé de prévention et de contrôle de moustiques en zones à multi-température selon la revendication 1, dans lequel le substrat de comprimé (1) est réalisé d'un matériau hydrophile.

3. Comprimé de prévention et de contrôle de moustiques en zones à multi-température selon la revendication 1, dans lequel deux secondes zones de médicament (3) sont disposées de manière symétrique sur deux côtés du substrat de comprimé (1).

4. Comprimé de prévention et de contrôle de moustiques en zones à multi-température selon la revendication 1, dans lequel le médicament répulsif dans la seconde zone de médicament (3) est la picaridine.

5. Dispositif électrique anti-moustiques (4), configuré pour chauffer le comprimé de prévention et de contrôle de moustiques en zones à multi-températuree selon l'une quelconque des revendications 1 à 4, **caractérisé en ce que** le dispositif électrique anti-moustiques (4) est pourvu d'une unité de chauffage (41), et l'unité de chauffage (41) est configurée pour chauffer la première zone de médicament (2) du substrat de comprimé (1).

6. Dispositif électrique anti-moustiques (4) selon la revendication 5, dans lequel le dispositif électrique anti-moustiques (4) est pourvu d'une fente (42) correspondant au substrat de comprimé (1).
